# EUROPÄISCHE PATENTSCHRIFT

(11) **EP 3 766 660 B1**
(45) Veröffentlichungstag und Bekanntmachung des Hinweises auf die Patenterteilung: **09.08.2023**
(21) Anmeldenummer: 20195886.5
(22) Anmeldetag: 15.06.2016
(51) Int. Cl.: B29C 48/16

(54) **KUNSTSTOFFELEMENT, HERSTELLVORRICHTUNG UND VERFAHREN ZUM HERSTELLEN DES KUNSTSTOFFELEMENTS**
PLASTIC ELEMENT, MANUFACTURING DEVICE AND METHOD FOR MANUFACTURING THE PLASTIC ELEMENT
ÉLÉMENT EN MATIÈRE PLASTIQUE, DISPOSITIF DE FABRICATION ET PROCÉDÉ DE FABRICATION D'ÉLÉMENT EN MATIÈRE PLASTIQUE

(30) Priorität: 17.06.2015 DE 102015211086
(43) Veröffentlichungstag der Anmeldung: 20.01.2021
(62) Teilanmeldung aus: 16731550.6
(73) Patentinhaber: Samvardhana Motherson Innovative Autosystems B.V. & Co. KG, 63486 Bruchköbel (DE)
(72) Erfinder: LANG, Georg, 96052 Bamberg (DE)
(74) Vertreter: Isarpatent

(56) Entgegenhaltungen:
- GB-A- 2 074 092
- JP-A- S53 145 866

## Beschreibung

### GEBIET DER ERFINDUNG

Die vorliegende Erfindung betrifft ein Kunststoffelement, insbesondere für ein Fahrzeug, sowie eine Herstellvorrichtung und ein Verfahren zum Herstellen des Kunststoffelements.

### TECHNISCHER HINTERGRUND

Bisher werden Karosserieteile, sowie Anbauteil an einem Fahrzeug meistens lackiert. Hierbei zeigen die Oberflächen solcher Karosserielacke sowie die lackierten Oberflächen von aus Kunststoff hergestellten Anbauteilen in Abhängigkeit von dem Lackierverfahren auf der Oberfläche eine ausgeprägte Struktur, welche allgemein als sog. Orangenhaut bezeichnet wird.

Des Weiteren ist aus der DE 10 2012 023 066 A1 ein foliendekoriertes Kunststoff-Formteil bekannt. Darin ist eine Zierblende für ein Kraftfahrzeug gezeigt, die als ein IMD-Formteil hergestellt ist. Das IMD-Formteil ist ein Kunststoff-Spritzgussteil, das zwei unterschiedlich gestaltete Dekorbereiche aufweist. Im ersten Dekorbereich ist eine zum Beispiel Silber glänzende Lackschicht appliziert, während im zweiten Dekorbereich das Kunststoffmaterial des Kunststoffträgers sichtseitig freigelegt ist. Am Übergang zwischen den beiden Dekorbereichen ist im Kunststoffmaterial des Kunststoffträgers eine Trennnut eingebracht, mit der die beiden Dekorbereiche optisch voneinander getrennt sind. Das Kunststoffmaterial des Kunststoffträgers kann beispielhaft ein Schwarzhochglanz-Substrat sein, bei dem das Material, etwa ABS-PC oder PMMA, entsprechend eingefärbt ist.

Eine solche mit einer Folie beschichtete Zierleiste hat jedoch den Nachteil, dass ihre Oberfläche nur als glatte und homogene Oberfläche ausgebildet werden kann und dem entsprechend empfindlich ist gegen Kratzer und Verschmutzungen usw., da diese sofort sichtbar werden. Des Weiteren bildet die glatte und homogene Oberfläche der Zierleiste einen sichtbaren und störenden Übergang zu einem lackierten Karosserieteil und eignet sich daher nur bedingt als Anbauteil bei einem Fahrzeug, nämlich da wo eine glatte und homogene Oberfläche, z.B. bei einer chromartigen Zierleiste, erwünscht ist.

Aus der JP S53 145866 A ist ein dekoratives Material bekannt, bei welchem farbige Kunstharz-Teilchen in einer transparenten Kunstharzfolie eingebettet sind und nach außen farbig hindurchscheinen. Das dektoraktive Material kann zusätzlich mit einer aufschäumbaren PVC-Schicht beschichtet werden zur Bereitstellung von Dämpfungseigenschaften.

Des Weiteren offenbart die GB 2 074 092 A ein Verfahren und eine Vorrichtung zur Ausrüstung von Profilen aus elastischen Materialien, wie beispielsweise aus Gummi, mit einer Auflage von Velourbändchen in einem Arbeitsgang.

### ZUSAMMENFASSUNG DER ERFINDUNG

Vor diesem Hintergrund liegt der vorliegenden Erfindung die Aufgabe zugrunde, ein Kunststoffelement mit einer strukturierten Oberfläche bereitzustellen.

Erfindungsgemäß wird diese Aufgabe durch ein Kunststoffelement mit den Merkmalen des Patentanspruchs 1, und durch ein Verfahren mit den Merkmalen des Patentanspruches 8 und/oder durch ein Verfahren mit den Merkmalen des Patentanspruches 9 gelöst.

### Demgemäß ist vorgesehen:

Ein Kunststoffelement für ein Fahrzeugmit den Merkmalen des Anspruchs 1.

Das Kunststoffelement hat den Vorteil, dass es mit einer definierten Oberflächenstruktur ausgebildet werden kann. Hierdurch kann das Kunststoffelement beispielsweise an ein mit dem Kunststoffelement verbundenes Bauteil, wie z.B. ein lackiertes Karosserieteil, gezielt angepasst werden. Des Weiteren kann das Kunststoffelement vollständig als Extrusionsteil oder teilweise als Extrusionsteil ausgebildet sein. In letzterem Fall bildet das Kunststoffelement beispielsweise ein Extrusionsteil mit einer Basis.

### Weiter ist vorgesehen:

Eine Herstellvorrichtung zur Herstellung eines Kunststoffelements, wobei die Herstellvorrichtung eine Extrusionsvorrichtung mit einer formgebenden Düse zum Herstellen des Kunststoffelements als Extrusionsteil oder als Extrusionsteil mit einer Basis und eine Beschichtungsvorrichtung aufweist zum Beschichten zumindest eines Abschnitts des Extrusionsteils mit einer Lackfolie, wobei die Lackfolie insbesondere Teil einer Lacktransferfolie ist. Die Herstellvorrichtung ist nicht beansprucht.

### Des Weiteren ist vorgesehen:

Ein Verfahren zur Herstellung eines Kunststoffelements mit den Merkmalen des Anspruchs 8.

Das Verfahren hat den Vorteil, dass eine Strukturierung an der Oberfläche des Kunststoffelements lediglich durch Beimischen der Partikel erzeugt werden kann, wobei diese Strukturierung durch die anschließend aufgebrachte Lackfolie abgebildet werden kann.

### Außerdem ist vorgesehen:

Ein Verfahren zur Herstellung eines Kunststoffelements mit den Merkmalen des Anspruchs 8.

Das Verfahren hat den Vorteil, dass eine Strukturierung durch mechanisches Bearbeiten oder Strukturieren der Oberfläche des mit der Lackfolie beschichteten Kunststoffelements erzeugt werden kann, beispielsweise mittels wenigstens eines Narbrollers, einer Besprenkelungseinrichtung und/oder einer Spritzdüseneinrichtung. In diesem Fall kann ein Beimischen von Partikeln in das Kunststoffmaterial des Kunststoffelements zusätzlich erfolgen oder auch ganz entfallen.

Die der vorliegenden Erfindung zugrunde liegende Erkenntnis/Idee besteht darin, ein Kunststoffelement mit einer strukturierten Oberfläche zu versehen, indem dem Extrusionsteil nicht schmelzende oder so wenig wie möglich aufschmelzende Partikel beigemischt werden, die das Extrusionsteil mit einer Oberflächenstruktur versehen, die durch eine auf das Extrusionsteil aufgebrachte Lackfolie anschließend abgebildet werden kann und/oder indem die Oberfläche des mit der Lackfolie versehenen Extrusionsteils durch ein mechanisches Verfahren strukturiert wird, indem durch Besprenkeln mit einem Fluid oder Gas und/oder durch Bestrahlen der Oberfläche der Lackfolie mit einem Fluid oder Gas die Oberfläche der Lackfolie des Extrusionsteils strukturiert wird. Auf diese Weise kann dass die Lackfolie aufweisende Kunststoffelement jeweils mit einer strukturierten Oberfläche versehen werden.

Vorteilhafte Ausgestaltungen und Weiterbildungen ergeben sich aus den weiteren Unteransprüchen sowie aus der Beschreibung unter Bezugnahme auf die Figuren der Zeichnung.

In einer erfindungsgemäßen Ausführungsform ist der wenigstens ein mit der Lackfolie beschichteter Abschnitt des Extrusionsteils durch wenigstens eine Strukturierungsvorrichtung strukturiert, wobei die Strukturierungsvorrichtung wenigstens ein Narbroller ist. Ein solcher Narbroller hat den Vorteil, dass er die Lackfolie mit einer definierten Strukturierung versehen kann.

In einer anderen erfindungsgemäßen Ausführungsform ist der wenigstens eine mit der Lackfolie beschichteten Abschnitt des Extrusionsteils durch wenigstens eine Strukturierungsvorrichtung strukturiert, wobei die Strukturierungsvorrichtung wenigstens eine Besprenkelungs- und/oder Spritzdüseneinrichtung ist. Zum Strukturieren des mit der Lackfolie beschichteten Abschnitts des Extrusionsteils kann ein Medium, insbesondere ein Fluid und/oder ein Gas, auf den Abschnitt gesprenkelt und/oder gestrahlt werden und dadurch der Abschnitt bzw. die Oberfläche der Lackfolie strukturiert werden. Auf diese Weise kann das mit der Lackfolie beschichtete Extrusionsteil ebenfalls sehr einfach mit einer Oberflächenstruktur versehen werden, wobei durch Parameter wie den Druck, den Abstand von der Lackfolie und/oder den Durchmesser eines Flüssigkeitsstrahls oder Luftstrahls die Oberflächenstruktur gezielt beeinflusst werden kann.

Gemäß einer erfindungsgemäßen Ausführungsform ist bzw. sind die Größe und/oder das Material der Partikel gleich oder unterschiedlich. Dadurch können unterschiedliche Effekte bei der Oberflächenstrukturierung des beschichteten Extrusionsteils erzielt werden.

In einer erfindungsgemäßen Ausführungsform sind die Partikel aus einem nicht aufschmelzenden Kunststoff, beispielsweise einem nicht schmelzenden Polyvinylchlorid, insbesondere einem vernetzten oder einem ein hohes Molekulargewicht aufweisenden Polyvinylchlorid, einer nicht aufschmelzenden Kombination aus Kunststoffen, einem mineralischen Werkstoff, einem keramischen Werkstoff, Talkum, Kreide und/oder Glas hergestellt. Der oder die nicht aufschmelzenden Kunststoffe sind dabei solche Kunststoffe die insbesondere in einer Extrudervorrichtung, z.B. einem Schneckenextruder oder Kolbenextruder nicht mit dem Kunststoffmaterial des Kunststoffelements mit aufschmelzen insbesondere vollständig aufschmelzen. Dadurch können die Partikel mit dem Kunststoffmaterial ein Extrusionsteil mit einer strukturierten Oberfläche bilden, welche von einer darauf applizierten Lackfolie abgebildet werden kann. Die Erfindung ist dabei nicht auf ein nicht schmelzendes Polyvinylchlorid als Beispiel für einen nicht schmelzenden oder aufschmelzenden Kunststoff beschränkt. Es kann jeder Kunststoff eingesetzt werden, welcher für ein Extrusionsverfahren geeignet ist und nicht schmilzt oder aufschmilzt oder während des Extrusionsverfahrens lediglich möglichst geringfügig schmilzt oder aufschmilzt.

In einer weiteren erfindungsgemäßen Ausführungsform ist der Gehalt an Partikeln in dem Kunststoffmaterial des Extrusionsteils vorzugsweise in einem Bereich von 20% bis 30%. Dadurch kann mittels der Partikel die Oberfläche des Extrusionsteils mit einer ausreichenden Strukturierung ausgebildet werden, die geeignet ist, wenn das Extrusionsteil mit einer Lackfolie beschichtet wird, eine einer lackierten Oberfläche ähnliche Struktur oder Orangenhautstruktur bereitzustellen.

In einer anderen erfindungsgemäßen Ausführungsform weisen die Partikel einen Durchmesser in einem Bereich von 40µm bis 60µm und vorzugsweise von 45µm bis 55µm und besonders bevorzugt von 50µm +/-4µm auf. Solche Partikel eigenen sich besonders zur Erzeugung einer Oberflächenstruktur des mit einer Lackfolie beschichteten Extrusionsteils, welches eine einer lackierten Oberfläche ähnliche Struktur oder Orangenhautstruktur aufweist.

In einer weiteren erfindungsgemäßen Ausführungsform besteht das Kunststoffmaterial aus wenigstens einem Kunststoff. Als Kunststoff kann Polyurethan und insbesondere ein teilvernetztes Polyurethan eingesetzt werden.

In einer anderen erfindungsgemäßen Ausführungsform ist das Kunststoffelement eine Fahrzeugblende, eine Fahrzeugleiste, z.B. eine Dachleiste oder Wasserabweiserleiste, eine Fenstereinfassung oder eine Schachtleiste. Die Erfindung ist auf die genannten Beispiele für Kunststoffelemente als Anbauteile für ein Fahrzeug nicht beschränkt. Die genannten Anbauteile sowie weitere Anbauteile für ein Fahrzeug können durch die Lackfolie sowohl in schwarz als auch farbig, beispielsweise in einer entsprechenden Fahrzeuglackierungsfarbe einschließlich einer weißen Fahrzeuglackierungsfarbe, ausgebildet werden. Die Lackfolie kann sowohl glänzend, insbesondere hochglänzend, als auch matt, einschließlich matt-einfarbig oder matt-metallic, ausgebildet sein.

Gemäß einer Ausführungsform der Erfindung weist das Kunststoffelement wenigstens ein Zusatzbauteil auf, wobei das Zusatzbauteil ebenfalls als beschichtetes Kunststoffelement oder als beschichtetes Kunststoffteil ausgebildet ist. Das beschichtete Kunststoffteil kann hierbei als Spritzgussteil mit wenigstens einem Abschnitt mit einer strukturierten Oberfläche ausgebildet sein, wobei dieser Abschnitt mit einer Lackfolie beschichtet ist. Ein solches Zusatzbauteil kann bei einer Dachleiste als beschichtetem Kunststoffelement beispielsweise ein Klappenelement zum Öffnen und Verschließen einer Öffnung in der Dachleiste sein. In geschlossenem Zustand kann das Klappenelement dabei einen optischen Übergang mit der übrigen Dachleiste bilden und eine strukturierte Oberfläche wie die übrige Dachleiste aufweisen. Ebenso kann ein Kunststoffelement, wie z.B. eine Dachleiste, auch ohne ein solches Zusatzbauteil ausgebildet sein oder mit einem anderen Zusatzbauteil. Im Falle einer Dachleiste kann diese dem entsprechend zusätzlich oder alternativ zu dem Klappenelement ein anderes Zusatzbauteil oder z.B. überhaupt kein Zusatzbauteil aufweisen.

In einer weiteren Ausführungsform der Erfindung ist das Extrusionsteil als eine Beschichtung auf zumindest einem Abschnitt der Basis aufgebracht. Dadurch können auch beschichtete Kunststoffelemente hergestellt werden, die nicht vollständig als ein Extrusionsteil ausgebildet sind sondern lediglich teilweise als ein Extrusionsteil ausgebildet sind oder dieses aufweisen.

In einer Ausführungsform der Erfindung ist die Basis ein Profil aus Metall und insbesondere aus Aluminium, einer Aluminiumlegierung oder Stahl ist. Eine Basis aus Aluminium oder einer Aluminiumlegierung hat den Vorteil, dass das fertige beschichtete Kunststoffelement später je nach gewünschter Endform bei Bedarf zurechtgebogen werden kann.

Gemäß einer erfindungsgemäßen Ausführungsform sind die Partikel aus einem Material hergestellt, welches nicht oder so wenig wie möglich mit oder in dem Kunststoffmaterial aufschmilzt. Dadurch, dass die Partikel in dem Kunststoffmaterial bei der Herstellung des Extrusionsteils durch Extrusion in der Extrusionsvorrichtung nicht aufschmelzen oder nur geeignet geringfügig aufschmelzen, so dass die Partikel die Oberfläche des Extrusionsteils immer noch mit einer Struktur ausbilden können, die von einer Lackfolie abgebildet werden kann, kann eine Oberflächenstruktur oder -strukturierung des mit der Lackfolie beschichteten Extrusionsteils erzeugt werden. Diese Oberflächenstrukturierung kann beispielweise eine Orangenhautstruktur oder eine einer Lackierung eines Karosserieteils möglichst ähnliche Strukturierung aufweist.

In einer erfindungsgemäßen Ausführungsform ist die Extrusionsvorrichtung ein Schneckenextruder, beispielsweise ein Einschneckenextruder oder ein Doppelschneckenextruder, oder ein Kolbenextruder. Kolbenextruder können beispielsweise eingesetzt werden, wenn ein häufiger Produktwechsel erfolgt oder Partikel verarbeitet werden, die zu einer Beeinträchtigung oder Beschädigung einer Schnecke führen könnten.

In einer anderen erfindungsgemäßen Ausführungsform liegt eine Laufgeschwindigkeit des Extrusionsteils oder des Extrusionsteils mit der Basis aus der formgebenden Düse der Extrusionsvorrichtung in einem Bereich zwischen 10°m/min bis 15°m/min. Dieser Bereich ist besonders in wirtschaftlicher Hinsicht von Vorteil. Die Erfindung ist jedoch nicht auf diesen Bereich für die Laufgeschwindigkeit beschränkt. So kann die Laufgeschwindigkeit auf kleiner als 10°m/min und größer als 15°m/min sein, je nach Funktion und Einsatzzweck.

In einer weiteren erfindungsgemäßen Ausführungsform liegt eine Drehzahl des Einschneckenextrudes in einem Bereich von 5°U/min bis 25°U/min liegt. Bei einem Extruder hängt die Drehzahl des Extruders mit der Laufgeschwindigkeit des herzustellenden Profils zusammen. Je höher die Drehzahl umso höher ist der Materialausstoß und umso mehr Profile können pro Zeiteinheit hergestellt werden.

Gemäß einer Ausführungsform weist die Herstellvorrichtung eine Strukturierungsvorrichtung auf, welche den wenigstens einen mit der Lackfolie beschichteten Abschnitt des Extrusionsteils strukturiert und diesen beispielsweise mit einer einer lackierten Oberfläche möglichst ähnlichen Struktur versieht oder strukturiert. Auf diese Weise können gezielt unschöne Übergänge zwischen dem später als Anbauteil am Fahrzeug eingebauten beschichteten Kunststoffelement und einem daran angrenzenden lackierten Karosserieteil verhindert werden.

In einer weiteren Ausführungsform ist die Strukturierungsvorrichtung wenigstens ein Narbroller und/oder wenigstens eine Besprenkelungs- und/oder Spritzdüseneinrichtung. Ein Narbroller hat den Vorteil, dass er mit einer definierten oder vorbestimmten Oberflächenstruktur versehen ist die problemlos auf eine Lackfolie übertragen und ein konstantes Ergebnis bereitgestellt werden kann. Eine Besprenkelungseinrichtung hat den Vorteil, dass die Lackfolie auf dem Extrusionsteil sehr einfach und kostengünstig durch besprenkeln mit einem Fluid wie Wasser oder Dampf strukturiert werden kann. Eine Spritzdüseneinrichtung hat wiederum den Vorteil, dass ebenfalls eine gezielte Strukturieren des mit der Lackfolie beschichteten Extrusionsteils erzeugt werden kann, wobei durch Einstellen oder Variieren von wenigstens einem Parameter wie dem Abstand des Fluid- oder Gasstrahls, insbesondere Luftstrahls, zu der Lackfolie, Durchmesser des Fluid- oder Gasstrahls und/oder Druck des Fluid- oder Gasstrahls das Ergebnis der Strukturierung der Lackfolie gezielt beeinflusst und variiert werden kann.

In einer Ausführungsform weist die Herstellvorrichtung eine Basis-Zuführungsvorrichtung auf zum Zuführen der Basis zu der Extrusionsvorrichtung zum Beschichten der Basis mit dem Kunststoffmaterial oder dem Gemisch aus dem Kunststoffmaterial und den Partikeln zum Ausbilden des Kunststoffelements als Extrusionsteil mit Basis.

In einer anderen Ausführungsform weist die Herstellvorrichtung eine Zuführungsvorrichtung auf zum Zuführen einer Lacktransferfolie, welche eine Lackfolie auf einer Trägerschicht aufweist. Die Zuführungsvorrichtung entfernt die Trägerschicht von der Lackfolie bevor die Lackfolie der Extrusionsvorrichtung zuführt wird zum Beschichten des mittels der Extrusionsvorrichtung hergestellten Extrusionsteils durch eine Beschichtungsvorrichtung.

Gemäß einer erfindungsgemäßen Ausführungsform weist das Verfahren das Bereitstellen wenigstens einer Besprenkelungs- und/oder Spritzdüseneinrichtung sowie das Besprenkeln und/oder Düsenstrahlen des wenigstens einen mit der Lackfolie beschichteten Abschnitts des Extrusionsteils durch die Besprenkelungs- und/oder Spritzdüseneinrichtung auf, zum Strukturieren des beschichteten Abschnitts. Das Extrusionsteil kann dabei sowohl nur aus einem Kunststoffmaterial oder auch alternativ aus einem Gemisch aus einem Kunststoffmaterial und Partikeln hergestellt sein, wobei die Partikel aus einem Material hergestellt sind, welches nicht oder so wenig wie möglich mit dem Kunststoffmaterial während der Herstellung, beispielsweise in einer Extrusionsvorrichtung, aufschmilzt. Dadurch kann beispielsweise ein Extrusionsteil zusätzlich strukturiert werden, welches bereits eine Strukturierung durch die Beimischung der Partikel in das Kunststoffmaterial aufweist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine Perspektivansicht eines Ablaufs der Herstellung eines beschichteten Kunststoffelements gemäß einer Ausführungsform der Erfindung;
- Fig. 2: eine Schnittansicht des beschichteten Kunststoffelements gemäß Fig. 1;
- Fig. 3: eine Schnittansicht eines beschichteten Kunststoffelements gemäß einer weiteren Ausführungsform der Erfindung; und
- Fig. 4: eine Schnittansicht einer Spritzgussform und eines Zusatzbauteils.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

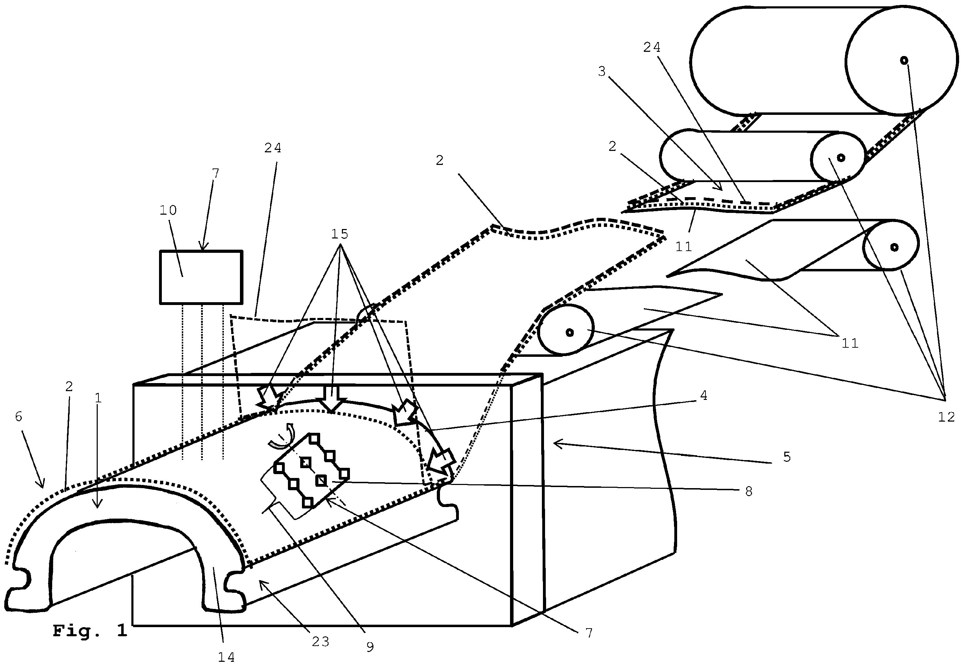

In Fig. 1 ist eine Perspektivansicht eines Ablaufs der Herstellung eines beschichteten Kunststoffelements 1 gemäß einer Ausführungsform der Erfindung schematisch und stark vereinfacht sowie nicht maßstäblich dargestellt.

Wir zuvor beschrieben werden Karosserieteile, sowie Anbauteil an einem Fahrzeug bisher in der Regel lackiert. Die Oberflächen solcher Karosserielacke bei einem Fahrzeug sowie die lackierten Oberflächen von aus Kunststoff hergestellten Anbauteilen zeigen in Abhängigkeit von dem Lackierverfahren auf der Oberfläche eine ausgeprägte Struktur. Im allgemeinen Sprachgebrauch wird diese Struktur in Fachkreisen als sog. Orangenhaut bezeichnet.

Statt des Lackierens beispielsweise von Anbauteilen, wie Blenden oder Leisten, Dachträgern usw., kann ein extrudiertes Anbauteil in hochglanzschwarz oder auch in dem jeweiligen Karosseriefarbton mittels einer Lacktransferfolie hergestellt werden. In diesem Fall müssen die Teile nicht mehr in einem zusätzlichen Arbeitsgang wie bisher lackiert werden. Stattdessen kann die lackartige Oberfläche durch eine Lacktransferfolie erzeugt werden.

Bedingt durch das Herstellungsverfahren bei welchem die jeweilige Lackfolie der Lacktransferfolien mittels Walzen oder einem Rakel aufgebracht werden, weisen diese Lackfolien jedoch eine glatte und sehr homogene Oberfläche auf. Wird daher ein Anbauteil mit einer solchen Lackfolie versehen und an einem Fahrzeug verbaut, so fällt das mit der Lackfolie versehene Anbauteil gegenüber der übrigen lackierten Umgebung des Fahrzeugs aufgrund seiner glatten Oberfläche auf. Dadurch entsteht ein ungleichmäßiges Erscheinungsbild des Fahrzeugs mit unerwünschten Übergängen zwischen dem jeweiligen mit einer Lackfolie beschichteten Anbauteil und einem jeweils lackierten Karosserieteil.

Daher wird gemäß der Erfindung ein beschichtetes Kunststoffelement 1 hergestellt, welches mit einer Lackfolie 2 einer Lacktransferfolie 3 beschichtet ist und eine strukturierte Oberfläche aufweist, wobei die strukturierte Oberfläche beispielsweise eine einer lackierten Oberfläche möglichst ähnliche Struktur oder Orangenhautstruktur aufweist.

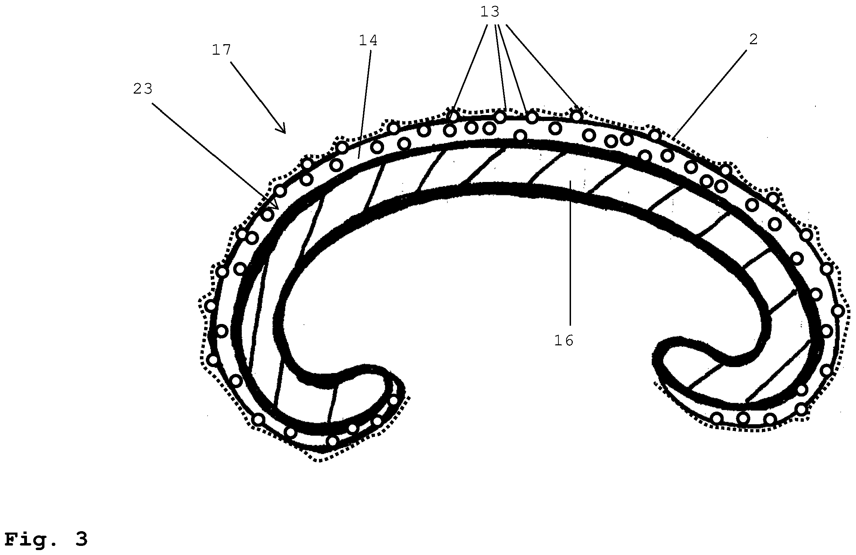

Wie in der erfindungsgemäßen Ausführungsform in Fig. 1 gezeigt ist, wird das Kunststoffelement 1 mittels eines Extrusionsverfahrens aus einem Kunststoffmaterial 14 vollständig als Extrusionsteil 23 hergestellt. In einer alternativen erfindungsgemäßen Ausführungsform kann das Kunststoffelement auch nur teilweise als Extrusionsteil bzw. Extrusionsteil mit einer zusätzlichen Basis hergestellt sein, wie in nachfolgender Fig. 3 gezeigt ist. Hierbei wird beispielsweise eine Basis, z.B. ein Metallprofil, in wenigstens einem Abschnitt, z.B. an seiner Außenseite oder Sichtseite, mit dem Extrusionteil versehen. Dazu wird die Basis mit dem Kunststoffmaterial 14 durch das Extrusionsverfahren in dem wenigstens einen Abschnitt beschichtet.

Das Kunststoffmaterial 14 besteht dabei aus einem Kunststoff oder einer Kombination aus wenigstens zwei Kunststoffen. Als Kunststoff kann dabei beispielsweise Polyurethan und insbesondere ein teilvernetztes Polyurethan oder ein nicht thermisch oder möglichst geringfügig thermisch verformbares Polyurethan verwendet werden. Die Erfindung ist jedoch nicht auf Polyurethan als Kunststoff beschränkt. Es kann jeder andere Kunststoff oder Kombination aus Kunststoffen verwendet werden, der bzw. die geeignet sind zur Herstellung eines Kunststoffelements 1 als Extrusionsteil und insbesondere Anbauteils eines Fahrzeugs, welches mit einer Lackfolie 2 einer Lacktransferfolie 3 beschichtet wird.

Das Kunststoffelement 1 kann dabei als Anbauteil für ein Fahrzeug, beispielsweise als Blende oder Leiste, Dachleiste oder Wasserabweiser, Schachtleiste, Fahrzeugscheibeneinfassung usw., ausgebildet sein.

Bei der Extrusion wird das Kunststoffmaterial 14 aus wenigstens einem Kunststoff aufgeschmolzen, z.B. kontinuierlich aufgeschmolzen, und durch eine formgebende Düse 4 einer Extrusionsvorrichtung 5 ausgetragen, wie in Fig. 1 stark vereinfacht und nicht maßstäblich dargestellt ist. Dabei wird mittels der formgebenden Düse 4 als Anbauteil für ein Fahrzeug in Fig. 1 beispielsweise eine Leiste 6 oder Blende als Kunststoffelement 1 ausgebildet.

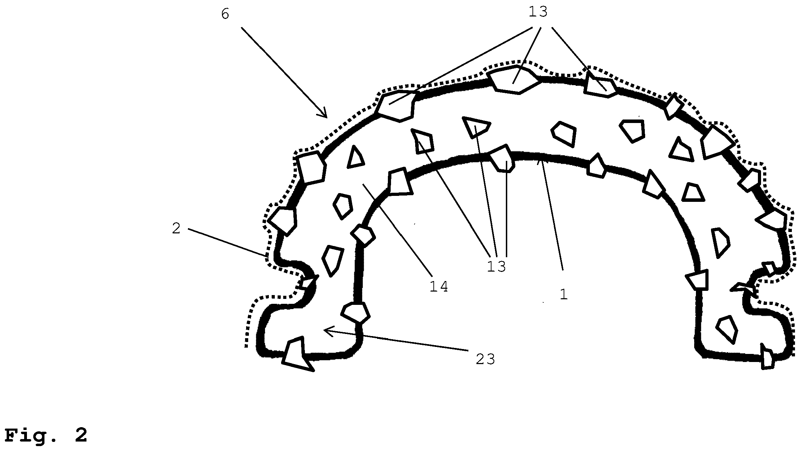

In einer alternativen Ausführungsform, wie sie in nachfolgender Fig. 3 gezeigt wird, kann das Kunststoffelement 1 statt vollständig aus dem Kunststoffmaterial 14 auch beispielsweise nur teilweise aus dem Kunststoffmaterial 14 hergestellt werden. Zum Beispiel kann das Kunststoffelement eine Basis, z.B. ein Metallprofil aus Aluminium, einer Aluminiumlegierung oder Stahl usw., aufweisen, das in wenigstens einem Abschnitt mit dem Kunststoffmaterial 14 durch Extrusion beschichtet wird zum Ausbilden des Kunststoffelements als Extrusionsteil mit einer Basis. Anschließend wird der durch Extrusion mit dem Kunststoffmaterial beschichtete Abschnitt des Kunststoffelements auf seiner Außenseite mit einer Lackfolie einer Lacktransferfolie beschichtet zum Ausbilden des fertigen beschichteten Kunststoffelements. Zur Ausbildung des mit dem Kunststoffmaterial beschichteten Abschnitts des Kunststoffelements mit einer definierten Oberflächenstruktur und vor dem abschließenden Aufbringen der Lackfolie, können dem Kunststoffmaterial nachfolgend näher beschriebene Partikel zugemischt werden. Das Zumischen von Partikeln wird beispielhaft mit Bezug auf das Ausführungsbeispiel in Fig. 1 und nachfolgender Fig. 2 beschrieben. Im Gegensatz zu der Darstellung in Fig. 1, in welcher das Kunststoffelement 1 vollständig als Extrusionsteil 23 ausgebildet wird, wird bei der in nachfolgender Fig. 3 gezeigten erfindungsgemäßen Ausführungsform die Basis, z.B. ein Metallprofilm, über eine nicht dargestellte Basis-Zuführungsvorrichtung der Extrusionsvorrichtung zugeführt und die Basis mittels der Extrusionsvorrichtung mit dem Kunststoffmaterial beschichtet. Anschließend wird das Extrusionsteil mit der Lackfolie beschichtet und bildet durch die dem Kunststoffmaterial beigemischten Partikel und/oder durch das Strukturieren mit einer im Folgenden noch näher beschriebenen Strukturierungsvorrichtung eine strukturierte Oberfläche aus. Das Beschichten des Extrusionsteils mit der Lackfolie kann unmittelbar oder zu einem späteren Zeitpunkt nach dem Verlassen der Extrusionsvorrichtung, in welcher das Extrusionsteil ausgebildet wird, erfolgen. Beispielsweise kann das Beschichten des Extrusionsteils nach einem anschließenden Abkühlbad für das Extrusionsteil erfolgen. Die Erfindung ist aber auf die genannten Beispiele zum Zeitpunkt des Aufkaschierens der Lackfolie auf das Extrusionsteil nicht beschränkt. Die Lackfolie kann zu jedem anderen geeigneten Zeitpunkt auf das Extrusionsteil aufgebracht oder aufkaschiert werden. Gleiches gilt für eine Strukturierung der Lackfolie durch eine noch näher zu beschreibende Strukturierungsvorrichtung. Die Lackfolie kann durch die Strukturierungsvorrichtung, wie z.B. einen Narbroller, eine Besprenkelungs- und/oder Spritzdüseneinrichtung, unmittelbar oder zu einem späteren Zeitpunkt nach dem Verlassen der Extrusionsvorrichtung auf das Extrusionsteil aufgebracht und durch die Strukturierungsvorrichtung strukturiert werden. Ebenso kann die Lackfolie auch nach einem anschließenden Abkühlbad für das Extrusionsteil auf dieses aufgebracht und durch die Strukturierungsvorrichtung strukturiert werden. Die Strukturierung der Lackfolie kann unmittelbar nach dem Aufbringen oder Aufkaschieren auf das Extrusionsteil erfolgen oder auch in einem späteren nachgeschalteten Arbeitsschritt.

Um das Kunststoffelement 1 auf seiner mit einer Lackfolie zu beschichtenden Außenseite mit einer einer lackierten Oberfläche möglichst ähnlichen Struktur oder Orangenhautstruktur zu versehen, werden gemäß einer Ausführungsform der Erfindung dem Kunststoffmaterial 14 des Kunststoffelements 1 die zuvor genannten Partikel zugemischt. Die in das Kunststoffelement 1 eingebrachten Partikel sind in Fig. 1 aus Gründen der Übersichtlichkeit nicht dargestellt.

Die Partikel bestehen aus einem Material oder einer Materialkombination welche nicht oder so wenig wie möglich in dem Kunststoffmaterial schmilzt oder aufschmilzt. Daher bilden die Partikel, wie in nachfolgender Fig. 2 gezeigt ist, mit dem Kunststoffmaterial eine strukturierte Oberfläche, die wenn sie mit der Lackfolie 2 zusätzlich beschichtet wird, eine Orangenhaut oder eine einer lackierten Oberfläche möglichst ähnliche Struktur bildet.

Bei dieser Ausführungsform zur Erzeugung einer Orangenhautstruktur oder einer einer lackierten Oberfläche möglichst ähnlichen Struktur auf dem Extrudat bzw. Kunststoffelement 1 wird der Kunststoff oder das Kunststoffmaterial 14 unterhalb der Lackfolie 2 durch wenigstens ein geeignetes Additiv in Form von nicht oder nur geringfügig aufschmelzenden Partikeln modifiziert. Dieser Partikelzusatz erzeugt im Kunststoff eine Oberflächenstruktur, welche sich derart auf die Lackfolie 2 der Lacktransferfolie 3 nach dem Beschichten des Kunststoffelements 1 mit dieser Folie 2 überträgt oder abbildet, wie in nachfolgender Fig. 2 angedeutet ist, so dass eine Oberfläche ähnlich der Orangenhautstruktur oder der Struktur einer lackierten Oberfläche erzeugt wird. Durch die Art des Modifizierungsstoffes sowie der Menge der Zugabe kann die Struktur des Extrudates bzw. Extrusionsteils und damit des Kunststoffelements 1 gezielt beeinflusst werden.

Als Partikel können beispielsweise vernetzte Partikel und damit nicht aufschmelzende Partikel aus Polyvinylchlorid (PVC) verwendet werden oder vernetzte Gummipartikel, Holzpartikel, Partikel aus wenigstens einem Duromer oder Duroplast, wie z.B. Epoxidharz, Polyurethan usw., Partikel aus einem mineralischen Werkstoff, Talkum, Kreide, Glas, insbesondere Glaskugeln, Keramik, Polyamid, Metall usw.. Beispielsweise kann das Kunststoffmaterial einen Anteil in einem Bereich von 20% bis 30% an Partikeln aufweisen. Die Erfindung ist jedoch auf diesen Anteil in einem Bereich von 20% bis 30% an Partikeln nicht beschränkt. Je nach Funktion und Einsatzzweck kann der Anteil auch kleiner als 20% sein. Die Partikel können dabei aus demselben Material oder wenigstens zwei unterschiedlichen Materialien hergestellt sein, sowie dieselbe Größe oder Durchmesser oder in wenigstens zwei unterschiedlichen Größen oder Durchmessern dem Kunststoffmaterial beigemischt werden.

Um das Extrusionsteil 23 bzw. Kunststoffelement 1 mit einer einer Orangenhaut oder einer einer lackierten Oberfläche möglichst ähnliche Struktur auszubilden, weisen die Partikel beispielsweise einen Durchmesser in einem Bereich von 40µm bis 60µm und vorzugsweise von 45µm bis 55µm und besonders bevorzugt von 50µm +/-4µm auf. Grundsätzlich ist die Größe oder der Durchmesser der Partikel beliebig wählbar, je nach gewünschter herzustellender Prägung oder Struktur der Oberfläche des Extrusionsteils 23 bzw. Kunststoffelements 1. Je dicker die Lackfolie der Lacktransferfolie umso schwächer und weicher wird die Struktur oder Prägung der Oberfläche des Extrusionsteils 23 bzw. Kunststoffelements 1 abgebildet. Umso dünner die Lacktransferfolie umso stärker und schärfer wird die Struktur oder Prägung der Oberfläche des Extrusionsteils 23 bzw. Kunststoffelements 1 wiederum abgebildet. Dem entsprechend kann durch die Wahl der Größe oder des Durchmessers der Partikel und der Dicke der Lackfolie, die Struktur der mit der Lackfolie versehenen Oberfläche des Extrusionsteils 23 bzw. Kunststoffelements gezielt eingestellt werden.

Die Ausprägung z.B. der Orangenhaut oder der einer lackierten Oberfläche möglichst ähnlichen Struktur kann durch die Wahl des Durchmessers oder der Größe der Partikel gezielt beeinflusst oder eingestellt werden. Je größer der Durchmesser oder die Größe der Partikel gewählt ist, umso gröber ist die mit der Lackfolie 2 versehene Oberfläche des Extrusionsteils 23 bzw. Kunststoffelements 1 und je kleiner der Durchmesser oder die Größe der Partikel gewählt ist, umso glatter ist die mit der Lackfolie 2 versehene Oberfläche des Extrusionsteils 23 bzw. Kunststoffelements 1.

Bei der Herstellung des Extrusionsteils 23 bzw. Kunststoffelements 1 durch Extrusion wird eine Extrusionsvorrichtung 5 verwendet. Als Extrusionsvorrichtung 5 kann dabei ein Schneckenextruder, beispielsweise ein Einschneckenextruder oder ein Doppelschneckenextruder, oder ein Kolbenextruder verwendet werden. Bei dem Kolbenextruder wird der Druck mittels eines Kolbens erzeugt. Kolbenextruder werden vor allem eingesetzt, wenn sich das zu verarbeitende Material nicht mittels Schneckenextrudern verarbeiten lässt oder ein häufiger Produktwechsel durchgeführt werden soll. Die Erfindung ist jedoch auf die genannten Beispiele für Extrusionsvorrichtungen nicht beschränkt.

Die Laufgeschwindigkeit des Extrusionsteils 23 bzw. Kunststoffelements 1 aus der formgebenden Düse 4 der Extrusionsvorrichtung 5 liegt in einem Bereich von vorzugsweise 10°m/min bis 15°m/min. Sofern ein Einschneckenextruder als Extrusionsvorrichtung 5 verwendet wird, liegt die Drehzahl der Extrusionsschnecke des Einschneckenextrudes 5 in einem Bereich von vorzugsweise 5°U/min bis 25°U/min.

In dem in Fig. 1 gezeigten Ausführungsbeispiel weist die Lacktransferfolie 3 neben der Lackfolie 2 eine optionale Trägerschicht 11 und eine optionale zusätzliche Schutzschicht 24 auf. Die Trägerschicht 11 ist dabei auf der Unterseite der Lackfolie 2 und die Schutzschicht 24 auf der Oberseite der Lackfolie 2 angeordnet. Die Trägerschicht 11 wird, vor dem Beschichte des späteren Extrusionsteils vor der Extrusionsvorrichtung 5 von der Lackfolie 2 abgezogen. Die Schutzschicht 24 bleibt dagegen zunächst auf der Lackfolie 2 und wird, wie in Fig. 1 gezeigt ist, beispielsweise zusammen mit der Lackfolie 2 auf das Extrusionsteil 23 aufgebracht und erst in einem späteren Schritt von der Lackfolie 2 entfernt zum Bereitstellen des fertigen mit der Lackfolie 2 beschichteten Kunststoffelements 1.

Wie in Fig. 1 gezeigt ist, wird die Lackfolie 2 und falls vorhanden die zusätzliche Schutzschicht 24 der Lacktransferfolie 3 nachdem das Extrusionsteil 23 bzw. Kunststoffelement 1 die formgebende Düse 4 der Extrusionsvorrichtung 5 verlassen hat, auf einen zu beschichtenden Oberflächenbereich des Extrusionsteils 23 bzw. Kunststoffelements 1 durch eine Beschichtungsvorrichtung 15 aufgebracht. Vorzugsweise wird die Lackfolie 2 und falls vorhanden die zusätzliche Schutzschicht 24 der Lacktransferfolie 3 z.B. direkt nach dem Verlassen der formgebenden Düse 4 auf das Extrusionsteil 23 bzw. das Kunststoffelement 1 durch die Beschichtungsvorrichtung aufgebracht, solange das Extrusionsteil 23 bzw. Kunststoffelement noch warm ist und anschließend das mit der Lackfolie 2 und falls vorhanden zusätzlichen Schutzschicht 24 beschichtete Extrusionsteil 23 bzw. Kunststoffelement 1 abgekühlt. Dabei kann das mit der Lackfolie 2 und falls vorhanden der zusätzlichen Schutzschicht 24 der Lacktransferfolie 3 beschichtete Extrusionsteil 23 bzw. Kunststoffelement 1 bei Raumtemperatur abkühlen oder mittels einer zusätzlichen nicht dargestellten Kühlungseinrichtung gekühlt werden. Die Lackfolie 2 und falls vorhanden die zusätzliche Schutzschicht 24 kann statt auf das Extrusionsteil 23 bzw. Kunststoffelement 1 direkt nach dem Verlassen der formgebenden Düse 4 aufgebracht zu werden, auch später auf das Extrusionsteil 23 bzw. Kunststoffelement 1 aufgebracht werden, beispielsweise vor, während und/oder nach dem Abkühlen des Extrusionsteils 23 bzw. Kunststoffelements 1. Während die Lackfolie 2 auf dem Extrusionsteil 23 verbleibt zum Bereitstellen des fertigen Kunststoffelements 1, wird die Schutzschicht 24, sofern vorhanden, von der Lackfolie 2 wieder entfernt oder abgezogen. Dies kann beispielsweise bei einem Extrusionsteil mit einer Metallbasis nach einem Streckbiegeprozess erfolgen, in welchem das mit der Lackfolie 2 und der Schutzschicht 24 beschichtete Extrusionsteil mit seiner Metallbasis in eine gewünschte Form durch den Streckbiegeprozess gebracht wurde. Die Schutzschicht 24 kann aber auch zu jedem anderen geeigneten Zeitpunkt von der Lackfolie 2 abgezogen werden. Dies kann vor dem Extrusionswerkzeug oder nach dem Verlassen des Extrusionswerkzeugs erfolgen, beispielsweise unmittelbar nach dem Verlassen des Extrusionswerkzeugs, vor oder nach dem Strukturieren der Lackfolie durch die Strukturierungsvorrichtung, vor oder nach dem Abkühlen des Extrusionsteils usw.. Die Erfindung ist auf die genannten Beispiele nicht beschränkt. Des Weiteren können die Trägerschicht (11) und die Schutzschicht (24) aus demselben Material oder unterschiedlichen Materialen hergestellt sein, je nach Funktion und Einsatzzweck.

Die Beschichtungsvorrichtung 15 kann beispielsweise nicht dargestellte Rollen oder Rakel aufweisen, wie in Fig. 1 mit Pfeilen P angedeutet ist, mittels der die Lackfolie 2 der Lacktransferfolie 3 auf das Extrusionsteil 23 bzw. Kunststoffelement 1 aufgebracht werden kann. Es kann jedoch auch jede andere Beschichtungsvorrichtung 15 vorgesehen werden, die geeignet ist die Lackfolie 2 auf wenigstens einen Abschnitt des Extrusionsteils 23 zu applizieren oder aufzubringen.

In einer weiteren Ausführungsform der Erfindung kann zusätzlich oder alternativ zu dem Einbringen von Partikeln in das Kunststoffmaterial, das Extrusionsteil 23 bzw. Kunststoffelement 1 mit einer Orangenhaut oder mit einer einer lackierten Oberfläche möglichst ähnliche Struktur versehen werden, indem die mit der Lackfolie 2 versehene Oberfläche des Extrusionsteil 23 bzw. Kunststoffelements 1 durch eine zuvor genannte Strukturierungsvorrichtung 7 strukturiert wird.

Als Strukturierungsvorrichtung 7 kann dabei, wie in Fig. 1 beispielhaft und rein schematisch dargestellt ist wenigstens ein Narbroller 8 vorgesehen werden, welcher die mit der Lackfolie 2 beschichtete Oberfläche des Extrusionsteils 23 bzw. Kunststoffelements 1 mit z.B. einer Orangenhaut oder einer einer lackierten Oberfläche möglichst ähnliche Struktur versieht. Dazu weist der Narbroller 8 eine entsprechend profilierte oder strukturierte Oberfläche 9 auf, wie in Fig. 1 stark vereinfacht dargestellt ist.

Des Weiteren kann als Strukturierungsvorrichtung 7 eine Besprenkelungs- und/oder Spritzdüseneinrichtung 10 vorgesehen werden, wie ebenfalls in Fig. 1 stark vereinfacht dargestellt ist. Die Besprenkelungs- und/oder Spritzdüseneinrichtung 10 ist derart ausgebildet, die mit der Lackfolie 2 der Lacktransferfolie 3 beschichtete Oberfläche des Extrusionsteils 23 bzw. Kunststoffelements 1 mit einem Fluid oder Dampf, z.B. Wasser oder Wasserdampf, zu besprenkeln und/oder mit wenigstens einer oder mehreren nicht dargestellten Düsen einen Düsenstrahl, insbesondere Fluidstrahl oder Gasstrahl, auf die mit der Lackfolie 2 beschichtete Oberfläche zu leiten, um die Oberfläche zu strukturieren. Die so strukturierte Oberfläche weist vorzugsweise eine Orangehautstruktur oder eine einer lackierten Oberfläche möglichst ähnliche Struktur auf.

Die Lacktransferfolie 3 weist, wie zuvor beschrieben die Lackfolie 2, eine Schutzschicht 24 und eine Trägerschicht 11 auf, wie in Fig. 1 beispielhaft gezeigt ist. Des Weiteren kann die Lackfolie 2 der Lacktransferfolie 3 eine Schicht oder mehrere Schichten aufweisen, um beispielsweise einen bestimmten Glanzeffekt, insbesondere Hochglanzeffekt, einen Metall-Effekt, Matt-Effekt, Farbeffekt, Abbildungseffekt der Struktur oder Prägung der Oberfläche des Extrusionsteils 23 bzw. Kunststoffelements usw. zu erzielen. Wahlweise kann die Lacktransferfolie auch mit der zuvor genannten zusätzlichen Schutzschicht 24 versehen sein, welche auf der Oberseite der Lackfolie 2 der Lacktransferfolie 3 vorgesehen ist, um die Lackfolie zu schützen. Diese Schutzschicht 24 kann, wie zuvor beschrieben, vor oder nach dem Aufbringen der Lackfolie 2 auf das Kunststoffelement wieder entfernt werden. Die Trägerschicht 11 für die Lackfolie der Lacktransferfolie 3 wird dagegen vor dem Aufbringen der Lackfolie auf das Kunststoffelement entfernt.

Diese Lacktransferfolie 3 wird der Extrusionsvorrichtung 5 durch eine Folien-Zuführungsvorrichtung 12 zugeführt und dabei die Trägerschicht 11 von der Lackfolie 2 durch die Folien-Zuführungsvorrichtung 12 entfernt oder abgezogen, bevor die Lackfolie 2 auf das Extrusionsteil 23 bzw. Kunststoffelement 1 durch die Beschichtungsvorrichtung aufgebracht wird. Die Lackfolie 2 der Lacktransferfolie 3 ist in Fig. 1 mit einer gepunkteten Linie angedeutet. Beispiele für Lacktransferfolien, wie sie bei der Erfindung verwendet werden können, werden z.B. von der Fa. Wörwag und der Fa. Akzo hergestellt. Die Schutzschicht 24 ist in dem Beispiel in Fig. 1 mit einer gestrichelten Linie angedeutet und wird beispielsweise nach dem Verlassen der Extrusionsvorrichtung 5 von der Lackfolie 2 entfernt, z.B. bevor die Lackfolie 2 durch die Strukturierungsvorrichtung strukturiert wird.

Die Lackfolie 2 kann sowohl wenigstens eine schwarz eingefärbt Schicht als auch wenigstens in einer vorbestimmten Lackfarbe eingefärbte Schicht aufweisen, entsprechend der Lackfarbe eines lackierten Karosserieteils, an welchem das Kunststoffelement 1 beispielsweise anschließend befestigt wird. Dadurch kann z.B. sowohl ein schwarzes wie auch ein farbiges, einschließlich weißes, beschichtetes Kunststoffelement 1 als Anbauteil für ein Fahrzeug hergestellt werden. Wie zuvor beschrieben kann die Lackfolie sowohl glänzend, insbesondere hochglänzend, matt und/oder metallisch ausgebildet sein, um ein entsprechend beschichtetes Kunststoffelement 1 herzustellen.

In Fig. 2 ist eine stark vereinfachte, rein schematische und nicht maßstäbliche Schnittansicht durch das mit der Lackfolie 2 einer Lacktransferfolie beschichtete Kunststoffelement 1 gemäß Fig. 1 gezeigt. Wie in Fig. 2 gezeigt ist, ist das Kunststoffelement 1 in dieser erfindungsgemäßen Ausführungsform vollständig als Extrusionsteil 23 ausgebildet und zusätzlich mit der Lackfolie 2 beschichtet.

Wie zuvor mit Bezug auf Fig. 1 beschrieben wurde, werden dem Kunststoffmaterial 14 des Extrusionsteils 23 bzw. Kunststoffelements 1 Partikel 13 zugemischt. Die Partikel 13 bestehen aus einem Material oder einer Materialkombination, welche nicht mit dem Kunststoffmaterial 14 in der Extrusionsvorrichtung aufschmilzt oder nur möglichst geringfügig mit diesem in der Extrusionsvorrichtung aufschmilzt, so dass eine strukturierte Oberfläche und keine glatte Oberfläche erzeugt wird. Auf diese Weise können die Partikel 13, wie in Fig. 2 gezeigt ist, mit dem Extrusionsteil 23 bzw. Kunststoffelement 1 eine strukturierte Oberfläche erzeugen, statt bisher einer völlig glatten Oberfläche.

Die auf der strukturierten Oberfläche des Extrusionsteils 23 bzw. Kunststoffelements 1 aufgebrachte Lackfolie 2 der Lacktransferfolie bildet dabei die strukturierte Oberfläche des Extrusionsteils 23 bzw. Kunststoffelements 1 ab, so dass ein Kunststoffelement 1 mit einer mit der Lackfolie 2 beschichtete Oberfläche erzeugt werden kann, die beispielsweise eine Orangehautstruktur oder eine einer lackierten Oberfläche möglichst ähnliche Struktur aufweist.

Die Lackfolie 2 der Lacktransferfolie ist in Fig. 2 ebenfalls mit einer gepunkteten Linie angedeutet.

In Fig. 3 ist eine stark vereinfachte, rein schematische und nicht maßstäbliche Schnittansicht durch ein mit einer Lackfolie 2 einer Lacktransferfolie beschichtetes Kunststoffelement 1 gemäß einem weiteren Ausführungsbeispiel der Erfindung gezeigt.

Das Kunststoffelement 1 gemäß Fig. 3 unterscheidet sich dabei von dem Kunststoffelement in den Fig. 1 und 2 dadurch, dass das Kunststoffelement 1 nicht vollständig als Extrusionsteil sondern nur teilweise als Extrusionsteil 23 aus einem Kunststoffmaterial 14 aus wenigstens einem Kunststoff hergestellt ist. Das Kunststoffelement 1 in dem Ausführungsbeispiel in Fig. 3 weist eine Basis 16, z.B. ein Metallprofil aus Aluminium, einer Aluminiumlegierung oder Stahl usw., auf, die mit dem Extrusionsteil 23 versehen oder beschichtet ist. Die Erfindung ist jedoch nicht auf eine Basis 16 aus Metall beschränkt. Je nach Funktion und Einsatzzweck kann die Basis 16 auch aus jedem anderen Material oder Materialkombination hergestellt sein, welche geeignet ist durch Extrusion mit einem Kunststoffmaterial aus wenigstens einem Kunststoff beschichtet zu werden zum Ausbilden eines Kunststoffelements 1 als einem Extrusionsteil 23 mit Basis.

Zumindest ein Abschnitt der Basis 16 wird durch Extrusion, wie zuvor beispielhaft mit Bezug auf die Fig. 1 und 2 beschrieben wurde, mit dem Kunststoffmaterial 14 beschichtet zum Ausbilden des Extrusionsteils 23, wobei dem Kunststoffmaterial 14 zur späteren Ausbildung einer strukturierten Oberfläche optional zusätzlich Partikel 13 zugemischt werden können, wie zuvor ebenfalls beispielhaft mit Bezug auf die Fig. 1 und 2 beschrieben wurde. Um unnötige Wiederholungen zu vermeiden wird auf die Beschreibung in den Fig. 1 und 2 verwiesen.

Bei dem in Fig. 3 gezeigten Ausführungsbeispiel wird z.B. die Sichtseite oder Oberseite der Basis 16 aus einer Aluminiumlegierung durch Extrusion mit dem Kunststoffmaterial 14 aus wenigstens einem Kunststoff beschichtet. Zur Ausbildung einer strukturierten Oberfläche, beispielsweise einer einer Orangenhaut oder einer einer lackierten Oberfläche möglichst ähnliche Struktur, sind dem Kunststoffmaterial 14 z.B. zusätzlich Partikel 13 beigemischt. In dem in Fig. 3 gezeigten Ausführungsbeispiel sind Partikel 13 z.B. in Form von Kügelchen mit einem zur Erzeugung einer strukturierten Oberfläche geeigneten oder vorbestimmten Durchmesser aus einem Material oder einer Materialkombination hergestellt, welches nicht oder so wenig wie möglich in dem Kunststoffmaterial schmilzt oder aufschmilzt. Die Partikel 13 in Form von Kügelchen können, wie zuvor mit Bezug auf Fig. 1 und 2 beschrieben wurde, beispielsweise aus Polyvinylchlorid (PVC), vernetztem Gummi, Holz, aus wenigstens einem Duromer oder Duroplast, wie z.B. Epoxidharz, Polyurethan usw., aus einem mineralischen Werkstoff, Talkum, Kreide, Glas, Keramik, Polyamid, Metall usw.. hergestellt sein. Die Erfindung ist aber auf die genannten Materialien für die Partikel nicht beschränkt. Es kann jedoch auch jedes andere Material oder Materialkombination eingesetzt werden die geeignet ist, um dem Kunststoffmaterial für das Extrusionsteil 23 des Kunststoffelements beigemischt zu werden, um eine gewünschte Oberflächenstruktur zu erzeugen.

Anschließend wird außen auf die mit dem Kunststoffmaterial 14 beschichtete Oberfläche der Basis 16 des Kunststoffelements 1, eine Lackfolie 2 einer Lacktransferfolie aufgebracht, wie zuvor beispielhaft mit Bezug auf die Fig. 1 und 2 beschrieben wurde. In Fig. 3 ist die Lackfolie 2 ebenfalls mit einer gepunkteten Linie angedeutet. Zusätzlich oder alternativ kann das mit der Lackfolie 23 beschichtete Extrusionsteil 23 des Kunststoffelements 1 auch mittels einer Strukturierungsvorrichtung, z.B. einem Narbroller usw., strukturiert werden, wie sie zuvor mit Bezug auf die Fig. 1 und 2 beschrieben wurde.

Die in Fig. 3 und zuvor in den Fig. 1 und 2 gezeigten beschichteten Kunststoffelemente 1 können beispielsweise als Blende oder Leiste, z.B. Dachleiste usw., an einem Fahrzeug vorgesehen werden. Ein beschichtetes Kunststoffelement 1 mit einer Basis 16 insbesondere aus einer Aluminiumlegierung hat den Vorteil, dass es später bei Bedarf gebogen werden kann, um beispielsweise als eine Dachleiste entlang des Dachs und wenigstens entlang einer der Fahrzeugsäulen zu verlaufen.

Eine solche Blende oder Leiste, insbesondere Dachleiste bei einem Fahrzeug, kann als beschichtetes Kunststoffelement 1 ein oder mehrere Zusatzbauteile aufweisen, die jeweils als ein beschichtetes Kunststoffteil oder Kunststoffelement gemäß der Fig. 1, 2, oder 3 ausgebildet sind und sich vorzugsweise optisch nicht oder so wenig wie möglich von der Dachleiste als beschichtetem Kunststoffelement 1 unterscheiden. Im Falle einer Dachleiste kann dieses Zusatzbauteil beispielsweise ein Klappenelement sein zum Öffnen und Verschließen einer Öffnung in der Dachleiste. Das Klappenelement kann dabei in die geöffnete Position, z.B. nach außen geklappt werden, um eine Öffnung in der Dachleiste freizugeben, zum Montieren von Elementen wie Dachträgern usw. an dem Fahrzeug. Das Zusatzbauteil kann dabei wie die Dachleiste als beschichtetes Kunststoffelement 1, wie zuvor mit Bezug auf die Fig. 1 bis 3 beschrieben ist, ausgebildet werden.

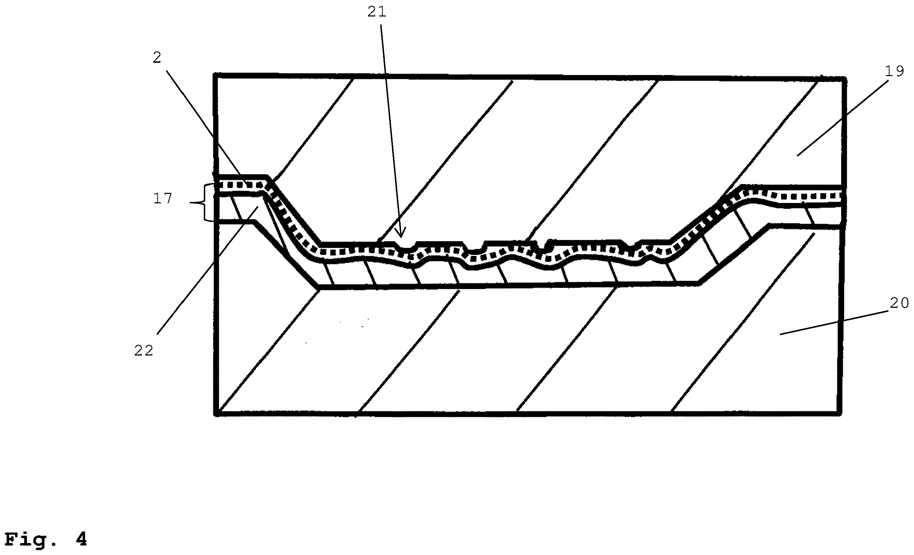

In einer alternativen Ausführungsform kann das Zusatzbauteil als beschichtetes Kunststoffteil 17 ausgebildet werden, wie in Fig. 4 rein schematisch und stark vereinfacht angedeutet ist.

Fig. 4 zeigt eine Schnittansicht einer Spritzgussform 18 zur Herstellung eines beschichteten Kunststoffteils 17 als Zusatzbauteil. Dabei weist die Spritzgussform zwei Formhälften 19, 20 auf. In dem in Fig. 4 gezeigten Ausführungsbeispiel ist ein Abschnitt der Innenseite einer der Formhälften 19 mit einer Strukturierung 21 versehen zum Erzeugen einer strukturierten Oberfläche bei dem Kunststoffteil 17. Dabei wird eine Lackfolie 2, welche in Fig. 4 mit einer gepunkteten Linie angedeutet ist, in die Spritzgussform 18 eingelegt und mit wenigstens einem Kunststoff 22 hinterspritzt. Dabei wird die Lackfolie 2 gegen die strukturierte Innenseite der Formhälfte 19 gedrückt, um das herzustellende Kunststoffteil 17 mit einer strukturierten Oberfläche zu versehen. Das fertige mit der Lackfolie 2 beschichtete Kunststoffteil 17 kann dabei mit einer Oberflächenstruktur versehen werden, welche eine einer Orangenhaut oder eine einer lackierten Oberfläche möglichst ähnliche Struktur aufweist.

Wie zuvor mit Bezug auf die Fig. 1-3 beschrieben wurde, kann die Lackfolie 2 wenigstens eine oder mehrere Schichten aufweisen. Des Weiteren kann das beschichtete Kunststoffteil 17 durch ein Einkomponenten-Spritzgussverfahren oder durch ein Mehrkomponenten-Spritzgussverfahren hergestellt werden.

Wie zuvor beschrieben, können als Kunststoffelement 1 Anbauteile für ein Fahrzeug, wie Blenden oder Leisten, z.B. Dachleisten, Fahrzeugscheibeneinfassungen usw. erzeugt werden. Die in Fig. 1, 2 und 3 gezeigte Form des Kunststoffelements 1 und dessen Querschnitt ist rein beispielhaft und die Erfindung ist nicht darauf beschränkt. Es kann jede Form und jeder Querschnitt erzeugt werden, welcher insbesondere durch eine Extrusionsvorrichtung erzeugbar ist. Ebenso ist die Erfindung auch nicht auf die in Fig. 3 gezeigte spezielle Ausführungsform des Kunststoffelements aus Extrusionsteil und Basis beschränkt. Die Basis kann jedes beliebige Profil aufweisen, je nach Funktion und Einsatzzweck. Des Weiteren kann das Extrusionsteil beliebig geformt oder die Basis damit beschichtet sein, je nach Funktion und Einsatzzweck.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die zuvor beschriebenen Ausführungsformen sind miteinander kombinierbar insbesondere einzelne Merkmale davon.

### Bezugszeichenliste

- 1: Kunststoffelement
- 2: Lackfolie
- 3: Lacktransferfolie
- 4: Formgebende Düse
- 5: Extrusionsvorrichtung
- 6: Leiste
- 7: Strukturierungsvorrichtung
- 8: Narbroller
- 9: Profilierte Oberfläche
- 10: Besprenkelungs- und/oder Spritzdüseneinrichtung
- 11: Trägerschicht
- 12: Folien-Zuführungsvorrichtung
- 13: Partikel
- 14: Kunststoffmaterial
- 15: Beschichtungsvorrichtung
- 16: Basis
- 17: beschichtetes Kunststoffteil
- 18: Spritzgussform
- 19: Formhälfte
- 20: Formhälfte
- 21: Strukturierung
- 22: Kunststoff
- 23: Extrusionsteil
- 24: Schutzschicht

## Patentansprüche

1. Kunststoffelement (1) für ein Fahrzeug, wobei das Kunststoffelement (1) als Extrusionsteil (23) oder als Extrusionsteil (23) mit einer Basis (16) ausgebildet ist, wobei wenigstens ein Abschnitt der Außenseite des Extrusionsteils (23) mit einer Lackfolie (2) beschichtet ist zur Ausbildung des Kunststoffelements (1) mit einer strukturierten Oberfläche, wobei die strukturierte Oberfläche vorzugsweise eine einer lackierten Oberfläche möglichst ähnliche Struktur aufweist, **dadurch gekennzeichnet, dass** das Extrusionsteil (23) aus einem Gemisch aus einem Kunststoffmaterial (14) und Partikeln (13) hergestellt ist, wobei die Partikel (13) aus einem Material hergestellt sind, welches nicht oder so wenig wie möglich mit dem Kunststoffmaterial aufschmilzt zur Ausbildung einer strukturierten Oberfläche des Extrusionsteils (23), wobei zur Ausbildung der strukturierten Oberfläche des Kunststoffelements (1) die Lackfolie (2) die durch beigemischten Partikel (13) strukturierte Oberfläche des Extrusionsteils (23) abbildet.

2. Kunststoffelement nach Anspruch 1,
**dadurch gekennzeichnet,**
**dass** die Oberfläche der Lackfolie (2) durch wenigstens eine Strukturierungsvorrichtung (7) strukturiert ist zur Ausbildung der strukturierten Oberfläche des Kunststoffelements (1).

3. Kunststoffelement nach Anspruch 2,
**dadurch gekennzeichnet,**
**dass** die Lackfolie (2) durch wenigstens einen Narbroller (8) als Strukturierungsvorrichtung (7) mechanisch strukturiert ist; und/oder
**dass** die Lackfolie (2) durch wenigstens eine Besprenkelungs- und/oder Spritzdüseneinrichtung (10) als Strukturierungsvorrichtung (7) mechanisch strukturiert ist und wobei zum Strukturieren der Oberfläche des Kunststoffelements (1) die Lackfolie (2) mit einem Medium, insbesondere einem Fluid und/oder einem Gas, besprenkelt und/oder düsengestrahlt ist.

4. Kunststoffelement nach einem der vorstehenden Ansprüche,
**dadurch gekennzeichnet,**
**dass** die Größe und/oder das Material der Partikel (13) gleich oder unterschiedlich ist bzw. sind; und/oder
**dass** die Partikel (13) aus Polyvinylchlorid, eine nicht aufschmelzenden Kunststoff oder Kombination aus Kunststoffen, einem mineralischen Werkstoff, einem keramischen Werkstoff, Talkum, Kreide und/oder Glas hergestellt sind und/oder
**dass** der Anteil an Partikeln (13) in dem Kunststoffmaterial (14) des Extrusionsteils (23) in einem Bereich von 20% bis 30% liegt; und/oder
**dass** die Partikel (13) einen Durchmesser in einem Bereich von 40µm bis 60µm und vorzugsweise von 45µm bis 55µm und besonders bevorzugt von 50µm +/-4µm aufweisen.

5. Kunststoffelement nach einem der vorstehenden Ansprüche,
**dadurch gekennzeichnet,**
**dass** das Kunststoffmaterial (14) aus wenigstens einem Kunststoff besteht, wobei der Kunststoff Polyurethan und insbesondere ein teilvernetztes Polyurethan ist.

6. Kunststoffelement nach einem der vorstehenden Ansprüche,
**dadurch gekennzeichnet,**
**dass** das Kunststoffelement (1) eine Fahrzeugblende, Fahrzeugleiste (6), insbesondere Dachleiste oder Wasserabweiserleiste, eine Fahrzeugscheibeneinfassung oder eine Schachtleiste ist; und wobei insbesondere das Kunststoffelement (1) wenigstens ein Zusatzbauteil aufweist, wobei das Zusatzbauteil ebenfalls als beschichtetes Kunststoffelement (1) oder als beschichtetes Kunststoffteil (17) ausgebildet ist, wobei das beschichtete Kunststoffteil (17) als Spritzgussteil mit wenigstens einem Abschnitt mit einer strukturierten Oberfläche ausgebildet ist, wobei dieser Abschnitt mit einer Lackfolie (2) beschichtet ist.

7. Kunststoffelement nach einem der vorstehenden Ansprüche,
**dadurch gekennzeichnet,**
**dass** das Extrusionsteil (23) als eine Beschichtung auf zumindest einem Abschnitt der Basis (16) aufgebracht ist; und/oder
**dass** die Basis (16) ein Profil aus Metall und insbesondere aus Aluminium, einer Aluminiumlegierung oder Stahl ist.

8. Verfahren zur Herstellung eines Kunststoffelements nach einem der Ansprüche 1 bis 7,
**gekennzeichnet durch,**
Bereitstellen einer Extrusionsvorrichtung (5);
Bereitstellen einer Beschichtungsvorrichtung (15);
Herstellen eines Kunststoffelements (1) als Extrusionsteil (23) oder als Extrusionsteil (23) mit einer Basis (16) aus einem Gemisch aus einem Kunststoffmaterial (14) und Partikeln (13) **durch** die Extrusionsvorrichtung (5), wobei die Partikel (13) aus einem Material hergestellt sind, welches nicht oder so wenig wie möglich mit dem Kunststoffmaterial (14) in der Extrusionsvorrichtung (5) aufschmilzt;
Beschichten wenigstens eines Abschnitts der Außenseite des Extrusionsteils (23) mit einer Lackfolie (2) **durch** die Beschichtungsvorrichtung (15), wobei die Lackfolie (2) die **durch** die beigemischten Partikel (13) strukturierte Oberfläche des Extrusionsteils (23) abbildet zum Erzeugen des Kunststoffelements (1) mit einer strukturierten Oberfläche.

9. Verfahren zur Herstellung eines Kunststoffelements nach einem der Ansprüche 1 bis 7,
**gekennzeichnet durch,**
Bereitstellen einer Extrusionsvorrichtung (5);
Bereitstellen einer Beschichtungsvorrichtung (15);
Bereitstellen einer Strukturierungsvorrichtung (7);
Herstellen eines Kunststoffelements (1) als Extrusionsteil (23) oder als Extrusionsteil (23) mit einer Basis (16) aus einem Gemisch aus einem Kunststoffmaterial (14) und Partikeln (13) **durch** die Extrusionsvorrichtung (5);
Beschichten wenigstens eines Abschnitts der Außenseite des Extrusionsteils (23) mit einer Lackfolie (2) **durch** die Beschichtungsvorrichtung (15); und
Strukturieren der Lackfolie (2) des wenigstens einen mit der Lackfolie (2) beschichteten Abschnitts des Extrusionsteils (23) **durch** die Strukturierungsvorrichtung (7) zum Erzeugen des Kunststoffelements (1) mit einer strukturierten Oberfläche.

10. Verfahren nach Anspruch 8 oder 9,
**gekennzeichnet durch,**
Bereitstellen wenigstens einer Besprenkelungs- und/oder Spritzdüseneinrichtung (10); Besprenkeln und/oder Düsenstrahlen **durch** die Besprenkelungs- und/oder Spritzdüseneinrichtung (10) der Lackfolie (2) des wenigstens einen mit der Lackfolie (2) beschichteten Abschnitts des Extrusionsteils (23) zum Strukturieren des beschichteten Abschnitts und Ausbilden des Kunststoffelements (1) mit einer strukturierten Oberfläche.

## Claims

1. Plastics material element (1) for a vehicle, the plastics material element (1) being formed as an extruded part (23) or as an extruded part (23) comprising a base (16), at least a portion of the outside of the extruded part (23) being coated with a lacquer foil (2) so as to form the plastics material element (1) with a structured surface, the structured surface preferably having a structure as similar as possible to a lacquered surface, **characterised in that** the extruded part (23) is produced from a mixture of a plastics material substance (14) and particles (13), the particles (13) being produced from a substance which does not fuse together with the plastics material substance or does so as little as possible so as to form a structured surface of the extruded part (23), the lacquer foil (2) replicating the surface, structured by admixed particles (13), of the extruded part (23) so as to form the structured surface of the plastics material element (1).

2. Plastics material element according to claim 1,
**characterised**
**in that** the surface of the lacquer foil (2) is structured by at least one structuring device (7) so as to form the structured surface of the plastics material element (1).

3. Plastics material element according to claim 2,
**characterised**
**in that** the lacquer foil (2) is structured mechanically by at least one pitted roller (8) as a structuring device (7); and/or
**in that** the lacquer foil (2) is structured mechanically by at least one sprinkler and/or spray nozzle device (10) as a structuring device (7), the lacquer foil (2) being sprinkled and/or nozzle-jetted with a medium, in particular a fluid and/or a gas, so as to structure the surface of the plastics material element (1).

4. Plastics material element according to any of the preceding claims,
**characterised**
**in that** the sizes and/or substances of the particles (13) are the same or different; and/or
**in that** the particles (13) are produced from polyvinylchloride, a non-fusing plastics material or combination of plastics materials, a mineral material, a ceramics material, talc, chalk and/or glass; and/or
**in that** the proportion of particles (13) in the plastics material substance (14) of the extruded part (23) is in a range of 20% to 30%; and/or
**in that** the particles (13) have a diameter in a range of 40 um to 60 um and preferably of 45 um to 55 um and particularly preferably of 50 um ± 4 µm.

5. Plastics material element according to any of the preceding claims,
**characterised**
**in that** the plastics material substance (14) consists of at least one plastics material, the plastics material being polyurethane and in particular a partially cross-linked polyurethane.

6. Plastics material element according to any of the preceding claims,
**characterised**
**in that** the plastics material element (1) is a vehicle cover, vehicle trim (6), in particular roof trim or water-repellent trim, a vehicle window gasket or a weather strip; in particular the plastics material element (1) having at least one additional component, the additional component likewise being formed as a coated plastics material element (1) or coated plastics material part (17), the coated plastics material part (17) being formed as an injection-moulded part having at least one portion having a structured surface, said portion being coated with a lacquer foil (2).

7. Plastics material element according to any of the preceding claims,
**characterised**
**in that** the extruded part (23) is applied as a coating to at least a portion of the base (16); and/or
**in that** the base (16) is a profile made of metal and in particular of aluminium, an aluminium alloy or steel.

8. Method for producing a plastics material element according to any of claims 1 to 7,
**characterised by**
providing an extrusion device (5);
providing a coating device (15);
producing a plastics material element (1) as an extruded part (23) or as an extruded part (23) comprising a base (16) made from a mixture of a plastics material substance (14) and particles (13) using the extrusion device (5), the particles (13) being produced from a material which does not fuse together with the plastics material substance (14) in the extrusion device (5) or does so as little as possible;
coating at least a portion of the outside of the extruded part (23) with a lacquer foil (2) using the coating device (15), the lacquer foil (2) replicating the surface, structured by admixed particles (13), of the extruded part (23) so as to form the structured surface of the plastics material element (1).

9. Method for producing a plastics material element according to any of claims 1 to 7,
**characterised by**
providing an extrusion device (5);
providing a coating device (15);
providing a structuring device (7);
producing a plastics material element (1) as an extruded part (23) or as an extruded part (23) comprising a base (16) made from a mixture of a plastics material substance (14) and particles (13) using the extrusion device (5); coating at least a portion of the outside of the extruded part (23) with a lacquer foil (2) using the coating device (15) ; and
structuring the lacquer foil (2), of the at least one portion of the extruded part (23) which is coated with the lacquer foil (2), using the structuring device (7) so as to create the plastics material element (1) with a structured surface.

10. Method according to either claim 8 or claim 9,
**characterised by**
providing at least one sprinkler and/or spray nozzle device (10) ;
sprinkling and/or nozzle-jetting the lacquer foil (2), of the at least one portion of the extruded part (23) which is coated with the lacquer foil (2), using the sprinkler and/or spray nozzle device (10) so as to structure the coated portion and form the plastics material element (1) with a structured surface.

## Revendications

1. Élément en matière plastique (1) pour un véhicule, l'élément en matière plastique (1) étant réalisé sous la forme d'une pièce extrudée (23) ou d'une pièce extrudée (23) avec une base (16), au moins une partie du côté extérieur de la pièce extrudée (23) étant revêtue d'une feuille laquée (2) pour former l'élément en matière plastique (1) avec une surface structurée, la surface structurée présentant de préférence une structure aussi semblable que possible à une surface laquée,
**caractérisé en ce**
**que** la pièce extrudée (23) est fabriqué à partir d'un mélange d'un matériau plastique (14) et de particules (13), les particules (13) étant fabriquées à partir d'un matériau qui ne fond pas ou fond aussi peu que possible avec le matériau plastique pour former une surface structurée de la pièce extrudée (23), la feuille laquée (2) reproduisant la surface de la pièce extrudée (23) structurée par les particules (13) ajoutées pour former la surface structurée de l'élément en matière plastique (1).

2. Élément en matière plastique selon la revendication 1,
**caractérisé en ce**
**que** la surface de la feuille laquée (2) est structurée par au moins un dispositif de structuration (7) pour former la surface structurée de l'élément en matière plastique (1).

3. Élément en matière plastique selon la revendication 2,
**caractérisé en ce**
**que** la feuille laquée (2) est structurée mécaniquement par au moins un rouleau graineur (8) en tant que dispositif de structuration (7) ; et/ou
**que** la feuille laquée (2) est structurée mécaniquement par au moins un moyen d'aspersion et/ou de pulvérisation (10) en tant que dispositif de structuration (7) et dans lequel, pour structurer la surface de l'élément en matière plastique (1), la feuille laquée (2) est aspergée et/ou pulvérisée par buses avec un milieu, en particulier un fluide et/ou un gaz.

4. Élément en matière plastique selon l'une des revendications précédentes,
**caractérisé en ce**
**que** la taille et/ou le matériau des particules (13) est ou sont identiques ou différents ; et/ou
**que** les particules (13) sont fabriquées à partir de polychlorure de vinyle, d'une matière plastique non fusible ou d'une combinaison de matières plastiques, d'un matériau minéral, d'un matériau céramique, de talc, de craie et/ou de verre et/ou
**que** la proportion de particules (13) dans le matériau plastique (14) de la pièce extrudée (23) se situe dans une plage de 20 % à 30 % ; et/ou
**que** les particules (13) présentent un diamètre dans une plage de 40 µm à 60 µm, de préférence de 45 µm à 55 µm et de manière particulièrement préférée de 50 µm +/-4 µm.

5. Élément en matière plastique selon l'une des revendications précédentes,
**caractérisé en ce**
**que** le matériau plastique (14) est constitué d'au moins une matière plastique, la matière plastique étant du polyuréthane et en particulier un polyuréthane partiellement réticulé.

6. Élément en matière plastique selon l'une des revendications précédentes,
**caractérisé en ce**
**que** l'élément en matière plastique (1) est un panneau de véhicule, une baguette de véhicule (6), en particulier une baguette de toit ou une baguette de déflecteur d'eau, un encadrement de vitre de véhicule ou une baguette de caisson ; et dans lequel en particulier l'élément en matière plastique (1) présente au moins un composant supplémentaire, le composant supplémentaire étant également réalisé sous la forme d'un élément en matière plastique revêtu (1) ou d'une pièce en matière plastique revêtue (17), la pièce en matière plastique revêtue (17) étant réalisée sous la forme d'une pièce moulée par injection avec au moins une partie présentant une surface structurée, cette partie étant revêtue d'une feuille laquée (2).

7. Élément en matière plastique selon l'une des revendications précédentes,
**caractérisé en ce**
**que** la pièce extrudée (23) est appliquée sous la forme d'un revêtement sur au moins une partie de la base (16) ; et/ou que la base (16) est un profilé en métal et en particulier en aluminium, en alliage d'aluminium ou en acier.

8. Procédé de fabrication d'un élément en matière plastique selon l'une des revendications 1 à 7, **caractérisé par** les étapes consistant à :
mettre à disposition un dispositif d'extrusion (5) ;
mettre à disposition un dispositif de revêtement (15) ;
fabriquer un élément en matière plastique (1) sous la forme d'une pièce extrudée (23) ou d'une pièce extrudée (23) avec une base (16) constituée d'un mélange d'un matériau plastique (14) et de particules (13) par le dispositif d'extrusion (5), les particules (13) étant fabriquées à partir d'un matériau qui ne fond pas ou fond aussi peu que possible avec le matériau plastique (14) dans le dispositif d'extrusion (5) ;
revêtir au moins une partie du côté extérieur de la pièce extrudée (23) avec une feuille laquée (2) par le dispositif de revêtement (15), la feuille laquée (2) reproduisant la surface de la pièce extrudée (23) structurée par les particules (13) ajoutées pour produire l'élément en matière plastique (1) avec une surface structurée.

9. Procédé de fabrication d'un élément en matière plastique selon l'une des revendications 1 à 7, **caractérisé par** les étapes consistant à :
mettre à disposition un dispositif d'extrusion (5) ;
mettre à disposition un dispositif de revêtement (15) ;
mettre à disposition un dispositif de structuration (7) ;
fabriquer un élément en matière plastique (1) sous la forme d'une pièce extrudée (23) ou d'une pièce extrudée (23) avec une base (16) constituée d'un mélange d'un matériau plastique (14) et de particules (13) par le dispositif d'extrusion (5) ;
revêtir au moins une partie du côté extérieur de la pièce extrudée (23) d'une feuille laquée (2) par le dispositif de revêtement (15) ; et
structurer la feuille laquée (2) de ladite au moins une partie de la pièce extrudée (23) revêtue de la feuille laquée (2) par le dispositif de structuration (7) pour produire l'élément en matière plastique (1) avec une surface structurée.

10. Procédé selon la revendication 8 ou 9,
**caractérisé par** les étapes consistant à :
mettre à disposition au moins un moyen d'aspersion et/ou de pulvérisation (10) ;
asperger et/ou pulvériser par buses, par le moyen d'aspersion et/ou de pulvérisation (10), la feuille laquée (2) de ladite au moins une partie de la pièce d'extrusion (23) revêtue de la feuille laquée (2) pour structurer la partie revêtue et former l'élément en matière plastique (1) avec une surface structurée.
